# EUROPEAN PATENT APPLICATION

(11) **EP 1 256 872 A1**
(43) Date of publication of application: **13.11.2002**
(21) Application number: 02076725.7
(22) Date of filing: 26.04.2002
(51) Int. Cl.: G06F 3/12

(54) **System for carrying out jobs on documents**

(30) Priority: 11.05.2001 EP 01201731
(71) Applicant: Océ-Technologies B.V., 5914 CC Venlo (NL)
(72) Inventor: Couwenberg, Wilhelmus Johannes, 5427 TD Boekel (NL); Hamberg, Roelof, 5916 KB Venlo (NL)

(57) **Abstract**

System for carrying out jobs on documents comprising a scanner, a printer and a controller. The controller comprises client modules for receiving jobs, a splitter module for splitting a job in a number of subjobs, worker modules for carrying out subjobs and a central storage area. A document is stored according to a document model in the central storage area. According to the document model, a state is assigned to the document. A state being made up by values of attributes. For carrying out a job, a document has to be brought from a source state to a target state. In a particular embodiment, splitting is carried out by identifying attributes that have different values in the source state and the target state and selecting worker modules that are able to act on these attributes.

## Description

### FIELD OF THE INVENTION

The invention relates to a system for carrying out jobs on documents, comprising transformation units that in co-operation generate a target document from an input document and a method for use in such a system.

Nowadays, architectures of document processing systems for carrying out jobs are known that comprise modules that each carry out a specific task on a document for carrying out a requested job. For instance, for executing a copy job, an original document is scanned by a scanner module, the resulting bitmaps are zoomed, rotated, ameliorated by image processing modules and these bitmaps again are sent to a printing module for delivering the desired copies of the original document. The division over available modules of the work that has to be done to carry out the job is made based on knowledge implicitly resident in the system. This knowledge is related to internal and external dependencies of the modules. Above that, such an architecture is built with certain assumptions on how jobs are formed. However, this results in a rigid system with a severe restriction for accommodating new functionality in such a system.

The object of the invention is to obviate the above described disadvantages.

### SUMMARY OF THE INVENTION

To this end, the document processing system according to the preamble is improved such that a document is stored according to a document model as a structure of components; a component has a component state assigned and a document has a document state assigned, the document state comprising component states; the transformation units having the ability to bring a component from a first state into a second state; and in that the system further comprises: means for composing a digraph of transformation units that is able to transform components of a document in such a way that the document is brought from the source document state to the target document state; and means for managing the processing of components by transformation units according to the digraph of transformation units.

This leads to a versatile system that is easy to adapt and to extend to cope with new requirements.

In an advantageous embodiment, a transformation unit has a cost attribute and the means for composing the digraph has means for calculating total costs of a digraph based on the cost attributes of transformation units comprised in the digraph and the means for composing a digraph of transformation units has means for returning a digraph with minimum total costs.
By manipulating cost attributes of transformation units, it is now possible to influence which transformation units are involved in the processing of a job. In this way, an optimal load distribution between transformation units can be obtained.

In a further embodiment according to the invention, the system comprises clients for inputting a document and a job to be carried out on the document, and the means for composing the digraph carry out the following steps: determining the state of components making up the source document, determining the state of components making up the target document, identifying attributes that have to be changed, identifying transformation units that change at least one of the identified attributes, determining the resulting set of states, comparing the resulting set of states with the state of components making up the target document, and repeating the step of identifying attributes that have to be changed, the step of identifying transformation units and the step of comparing, until the comparison is fulfilled whereafter the resulting digraph of transformation units is returned.

This leads to a fast converging process for the determination of involved transformation units.

### BRIEF DESCRIPTION OF THE DRAWINGS

The invention will be explained in detail with reference to the accompanying drawings wherein:
Fig.1 shows a block diagram depicting an architecture of a system according to an embodiment of the invention.
Fig.2 shows a class diagram representing objects and its relations used in the information blackboard according to an embodiment of the invention.
Fig.3 shows a class diagram representing the document model according to the invention
Fig.4 shows an object diagram illustrating objects involved in a job
Fig.5 is a flowchart, illustrating processing steps of a method for splitting a job into subjobs according to an embodiment of the invention.

### DESCRIPTION OF THE EMBODIMENTS

### ARCHITECTURE

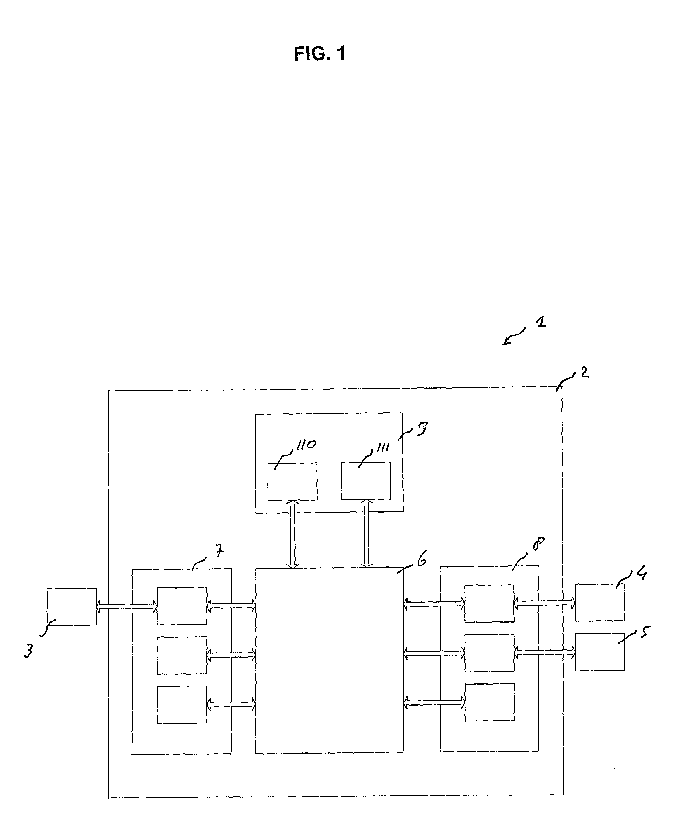

Fig.1 shows an overview of the architecture of a system 1 for carrying out jobs on documents according to an embodiment of the invention. The system 1 comprises a controller 2 operatively connected to a graphical terminal 3 for user interaction, and operatively connected to a scanner engine 4 and a printer engine 5. The controller 2 comprises an information blackboard 6, a number of clients 7, a number of transformation units also referred to herein as 'workers' 8, and a workflow management module 9. The information blackboard 6 is a central repository of optionally persistent objects representing what the system has to do, as well as global configuration and state information. It contains all information that is shared between the other modules of the controller 2. In the architecture according to the invention, modules in the system do not communicate with each other. Each module reacts on information in the information blackboard 6 and each module updates information in the information blackboard 6. This enables a loose coupling between the modules, unnecessary dependencies between the modules are avoided, and a high degree of modularity is reached. In this way, it is possible to add an extra component with only minor modifications at well-defined places.
Clients 7 receive jobs from the outside, e.g. through a network client or through the terminal 3, place these jobs in the information blackboard 6, and return information about the status of the job to the outside. These jobs are implemented as objects named "client jobs". Workers 8 carry out activities to perform execution of jobs. Such activities will further be described by objects named "worker jobs". The workflow management module 9 carries out controlling tasks and includes a scheduler 110 and a splitter 111. The scheduler 110 controls the dynamical aspects of the system such as initiating and controlling execution of jobs. The splitter 111 breaks down client jobs into worker jobs.

### Information Blackboard

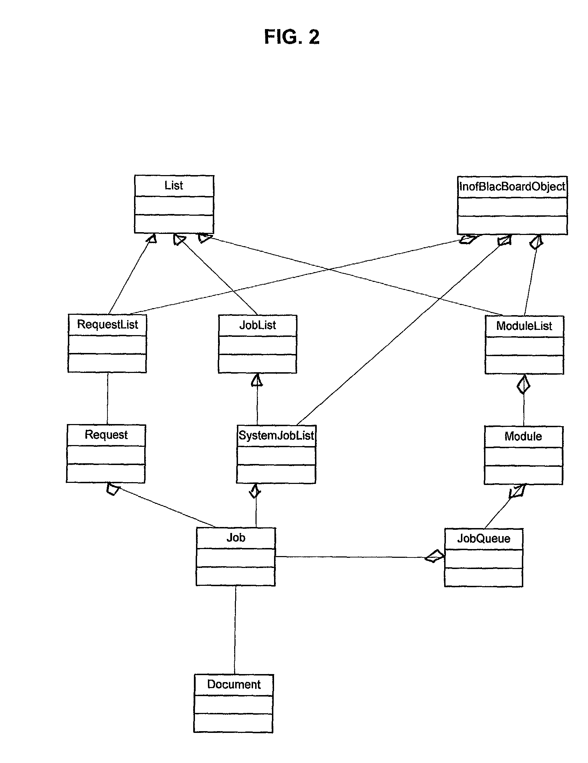

The Information blackboard 6 is a central data storage means that is responsible for keeping all information, which has a scope, larger than a scope of a single worker or a single client. This information includes the description of jobs, documents, engine status information, configurations, etc. Fig.2 shows a class diagram showing relations for objects resident at a certain instance in the information blackboard 6 of the system 1. As shown in Fig.2, a number of classes inherit from the class List. For user requests, the highest level in the job submission and control hierarchy, a RequestList has been included. The RequestList shows references to all requests (Request) in the system. The systemJobList is the list of all jobs (Job) in the system. This includes both the user-defined client jobs as well as the subjobs, derived after decomposition. If a new client job is added, the job is placed in the SystemjobList after which the scheduler 110 will place it in the queue for the splitter 111. After decomposition (i.e., splitting of the job into subjobs), the splitter 111 will place the newly created subjobs in the SystemJobList. The scheduler 110 is notified by that action after which it schedules the subjobs towards the appropriate queue or list. The right side of the class diagram in Fig. 2 shows all classes related to job modules (worker/client/splitter). The ModuleList contains references to all Module objects in the information blackboard 6. To each job processing module, a Module Object is attached, specifying its status as well as being the object referencing to all other information objects belonging to this module, like jobqueue, configuration and supplies (e.g. paper tray contents). Thus each client and worker is represented by a Module object in this diagram, which has a reference to a job queue belonging to this module. In the JobQueue, all active (processing or waiting for automatic start) jobs are ordered according to the order of processing.
The InfoBlackBoardObject includes the RequestList, the SystemJobList, and the ModuleList. The information black board 6 comprises a subscription and notification mechanism for new tasks and information changes. Clients can subscribe on these changes and are in this way able to monitor document and worker states.

### Clients

A client 7 receives jobs entered by a user. It puts a job in the systemJobList. Once the job is split into several subjobs, the client is able to read the status of all subjobs separately. A Request entered by the user is placed in the RequestList. The client may change the status of the whole job. This change then holds for all subjobs. Examples of client modules are a local user interface module and networked job submission module.

### Splitter

The splitter module 111 is responsible for the creation of subjobs, which together make up a job as required by a user. The splitter has access to its job queue, also named "splitterqueue", on the information blackboard and it starts splitting these jobs in the same order as in which they are placed in this queue. As a result of the splitting activity, the splitter creates a set of subjobs. It puts the subjobs in the systemJobList. In case the initial steps of the job can be done independently and thus parallel, the splitter will create more than one worker job for these initial steps. The splitter looks up information regarding available workers in a table stored in the information blackboard 6

### Scheduler

The scheduler 110 ensures that all jobs are assigned to workers. Worker jobs created by the splitter 111 are assigned to available workers 8 in order to execute the already known actions required to perform the client jobs. For each worker, worker jobs are placed in a queue. The scheduler 110 is the only component responsible for putting jobs in a queue or removing them from a queue. The job assignment is done taking into account the attributes of the worker jobs and of the client jobs they originate from, whether the worker can accept more worker jobs, and the availability of multiple instances of the same worker type. The scheduler 110 is also responsible for suspending or cancelling the appropriate worker jobs under special circumstances when the system changes state. The scheduler 110 decides the order in which the jobs are processed. The scheduling strategy for the scheduler 110 can however be specified in the information blackboard 6. These settings are user configurable. The scheduler 110 translates the scheduling attributes for the entire job into the scheduling attributes for the subjobs.

### Worker

Workers 8 are either software layers that are connected to physical devices, e.g., a scanner or a printer, or software modules that carry out specific tasks, like ripping a PostScript File.
Each worker has an associated worker job queue. The order in the worker job queue is the order in which the worker must produce the results. In addition, each worker has a worker state object on the information blackboard 6 that is used to read or write its global state. A worker may be in one of the following states: idle, running, suspended, and suspend pending. Methods for the work job queue are: add a worker job at a specific location in the list and remove a worker job from the list.
Different states of a worker job are: created, assigned, active, done, failed, cancelled and stopped.
If a subjob is ready, the subjob stays in the worker job queue with the status ready. The worker is not responsible for removing or adding a job to the worker job queue.
If the job has to be stopped or suspended in response to a user request, specified by some information in the information blackboard, the worker responds to the request.
The worker will properly handle such a request. If the job is suspended or stopped, the worker changes the status of the subjob.
Examples of workers 8 include, but are not limited to, an interpreter module, a scan module and a print module.
A worker job comprises a description of actions to be performed by a worker, references to input objects to retrieve from the information blackboard, and references to the output objects to be produced by the worker.

### DOCUMENT MODEL

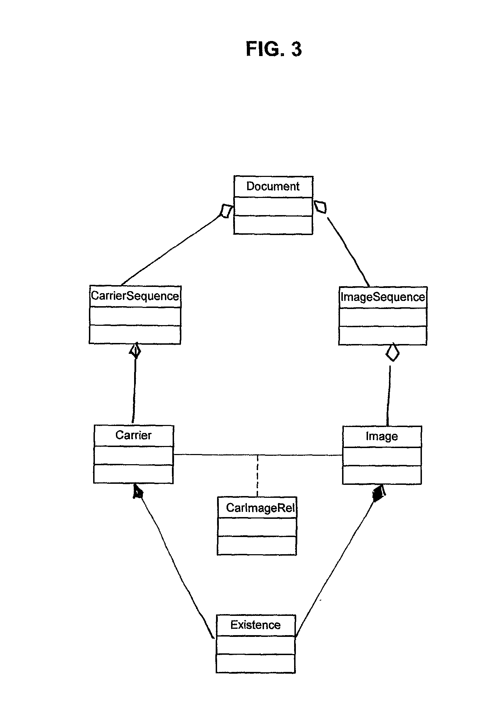

A document is stored in the system 1 according to a document model. The document model is explained with reference to FIG.3. The document model comprises a number of related components. Component types are: image, carrier and carrier-image-relationship. When reproducing documents from an original document it is observed that that an original document and a copy of it share the same images in the same sequence of images (imageSequence); e.g. a booklet and a simplex version of the same document share the same image sequence and the same images, although the appearances are different. This is taken as the starting point for the dynamics of the model. Adding an image in the original document has the implication that the same image also must be added in the related copy document. This is the case, e.g. when a next original is detected in the input tray of the scanner.
Based on the above the document is considered as a sequence of images on a sequence of carriers (CarrierSequence), where carriers can be sheets or bitmap files. So basic document objects are: Carrier, Image and CarrierlmageRelationship. The latter object defining how a carrier and an image are related. By way of example two cases are given. In a first case two identical images of A4 format are positioned side by side on one face of an A3 paper sheet. (Such a configuration is useful for producing two copy sets simultaneously where, after delivery, the resulting A3 set is cut in two A4 sets). This configuration is represented in the document model by two carrierlmageRelationship objects, one with a position attribute 'left' and the other with a position attribute 'right' between the carrier object on one side and the image object at the other side. In a second case, modelling a duplex document, a first image is connected to a carrier object by means of a first carrierlmageRelationship object, with a 'front' attribute and a next image is connected to the same carrier object by a second carrierlmageRelationship object with an attribute 'rear'.
On different levels, different attributes exist. On a document level, attributes concerning the whole document are available. A jobticketparser, a jobticket generator and a pdl-interpreter can handle these. The last is able to transform a document on this level towards the image and carrier level. On the image and carrier level images and carriers are presented by single objects. On this level the basic scanner works. In addition, on this level, activities are synchronized by notification mechanisms per single image object resulting in a maximum productivity and minimized response time.
Application of the document model is particular advantageous when used in combination with the information black board, since all architectural components have access to the information black board and all access the same model, so that no direct communication is needed both between worker-level and client-level and between individual workers.

### JOB MODEL

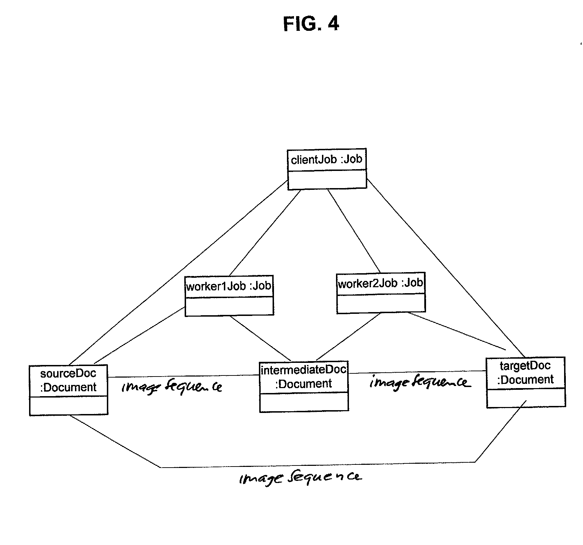

A job refers to a target document that must be created. This target document includes references to source documents delivering the sequence of images needed for creating that target document. These references or ImageSequence relations between the target document and its source document form the basis for the dynamics of the model.
To accommodate job requirements, the document model is such that besides that a real document, as it is, is accommodated also within the same document model, a document recipe and a document specification may be expressed in the document model. The document recipe holds the initial description of the expected result, and this description is independent of the actual source document. The document specification describes the document's exact appearance, and it gives an exact specification of what must be made. To be able to accommodate all these aspects of a document in one and the same tree, an existence attribute is added for image and carrier objects. This existence attribute ("Existence" in Fig.3) may have the value: recipe, specified and real to indicate to what aspect the data at hand belong. This is possible since for workers at any moment each part of a document has only one relevant state.
A client job expresses the command to create a target document from a source document as formulated by the client. This job will be split in worker jobs that will be handled by various workers. Fig. 4 shows the relations between a client job, worker jobs and related documents according to an embodiment of the invention.
Thus, the document model according to the invention, preferably embodied as a computer implemented datastructure, comprises at least one carrier sequence and at least one image sequence, a carrier sequence comprising at least one carrier and an image sequence comprising at least one image, at least one carrier image relationship indicating an association between one carrier and one image and an existence parameter associated with each image.
It is advantageous to assign a value to the existence parameter chosen from the domain recipe, specified and real.
Application of the document model disclosed here is advantageous in that the model accommodates equally the document as a whole as well as all document components, accommodates a document during all productionsteps necessary for the processing of the job; accommodates equally the document in all of its manifestations, be it in electronic form or on hard copy; accommodates equally a recipe, a full specification, or a realisation of the document.
As a consequence of the above, during processing the document is described all the time in the same document model, so that no conversions are needed from one format to another format during processing and that even no conversions are needed to go from the client layer, where the complete job is considered, to the worker layer, where a sub job is considered.

### DYNAMIC ASPECTS

When processing a copy job, at first the involved client will create instances of the source and target document, initially as recipes. During processing, the source recipe will be replaced by real images and associated carriers one by one as they are scanned in. The splitter will split the job in subjobs and create intermediate instances of the document. Workers, assigned by the splitter, will access the created instances, perform their part of the job, and update the model accordingly. Each time, a next step will be enabled upon change of state of the existence parameter, for each image and associated carrier involved. This process continues until eventually all target images and associated carriers have the existence state real and all further required target states have been reached. The desired copies have been realized then and the job is finished.
Processing of a copy job will now be described in more detail.
The document model according to the invention makes it possible to simultaneously accommodate components that are in disparate phases of processing to come from the source document to the target document.
The relation between the source document and target document is only an ImageSequence relation. The individual images in the target document specification refer to individual images in the source document.
This also holds for the steps in between, where intermediate documents are in existence, due to worker jobs that are defined by the splitter on the basis of the client job.
To determine what must be made from what, source images must be related to target images and vice versa. To be able to copy a document, a path must be found from a single sheet or bitmap to another bitmap or sheet. All attributes to scan or print can be found in the objects that together form that path. These paths are found based on necessary transformations from images and its sequence of a document in a first state to images and its sequence of a document in a second state. To be able to relate source and target images, every image must have a locally defined sequence number. Then to relate a source image to a target image, a unique target image must be created having the same sequence number.
After adding a real image to the source document, a unique target image will be created having the same image index. If this succeeds, the target image will get the specified state. The change into the specified state will trigger for example a print worker that took a subscription to the target sheet.
Workers operate on the various components of the document. A scan worker detects a document, and will update the sourceRealDocument according to the Documentrecipe and will create the intermediateDoc object. A print worker sends print commands to the printer or print engine in the order of delivery of the sheets to the finisher. Basic operations of an image manipulation worker working on images are: copying, pasting/clipping and gradation controlling and zooming. As a matter of fact, workers change attributes of the various components. For instance an image manipulation worker will work on the attribute size (for zooming), and will work on the attribute OD (Optical Density) (for gradation control). Besides that, workers may also change the way in which components are structurally related to each other. This information is presented as structural attributes. Examples are: carrier plexity, number and position of images on a carrier (as indicated by the involved carrierlmageRelationship objects), and number of paper types. In this way, attributes define the state a component or the document as a whole is actually in. As workers change attributes, the state of the document changes and in this way a job can be considered as a collection of state transitions.
In order to extract a state, the system according to the invention has provisions for retrieving all images in the context of a document recipe; for each image it is possible to get a pointer to a carrier, a basic document connected to that carrier; and for each of these objects it is possible to retrieve the attribute values. Structural attributes are obtainable by methods of either one of the objects of the document.

### EXAMPLE

To illustrate the overall dynamics of the processing of a job according to the invention, an example will now be given for the processing of a copy job. At the local user interface, a user defines a new copy job. The user places the original document on the ADF and presses the start button. The scanner or the like scans the document and the printer prints the requested number of copies.
The execution of the copy job is triggered by the notification to the scheduler 110 by the systemJobList. As a reaction, the scheduler 110 selects the new job and makes itself dependent of the copy job so that it is notified if the job changes. Then it adds the copy job to the splitter queue. The splitter 111 being dependent on changes of the splitter queue receives a notification and selects the copy job. It reads the settings of the copy job and splits the job into two basic jobs: a scan job and a print job. These jobs are added to the (composite) copy job. Both jobs are placed in the systemJoblist.
The scheduler 110 is notified by the systemJobList because the scanJob and printJob are added to the systemJobList.
First the scheduler 110 it selects the scanJob and makes itself dependent, after which it puts the job in the scanQueue at a position based on the attributes of the job, e.g. priority. The scanmodule is now notified by the scanQueue. The same is done with respect to the printJob. The two parallel activities start: the scan activity and print activity.
The scan activity is initiated by the notification of the scanQueue. The scan module then selects the scanJob and makes itself dependent. Next, it sets the job status to processing. The scheduler 110 being dependent will receive a notification of this, but it will ignore the notification because it is no relevant change for the scheduler 110. Then the scanner reads the settings and executes the job. When ready the scan module sets the status of the job to the ready state and removes itself from the dependency list of the job. Now it has no relation with a job anymore and it will return to the idle state waiting for a notification from the scanQueue. The change of job status to the ready state has notified the scheduler 110, which now removes the scanjob from the scanQueue.
The second activity is the print process. The notification of the print module by the printQueue starts the print job. It is executed in a similar way as the scan job. Now both jobs are ready so the scheduler 110 can remove the copy job as well as the scan- and print job from the systemJobList and removes the dependencies of these jobs. The end result is that the jobs with the ready state are only referenced by the request.

### SPLITTING METHOD

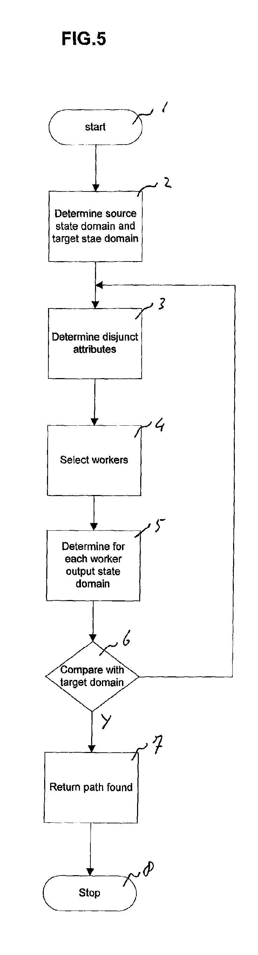

The splitting method according to the invention will now be explained with reference to FIG. 5. A client job is received by a client module. The job is placed in the systemJobList. From there, the scheduler places the job in the splitter queue. Upon notification that a job is available in its queue, the splitter takes the job from the splitter queue in step 1. In step 2, a source state and a target state are extracted from the document model. Each state is represented as a sequence of attribute values. In step 3 the source state and target state are compared and attributes with disjunct values are identified. In step 4 from a table in the information blackboard 6, where for each input domain, one or more output ranges are given together with the workers that are able to transform that input domain to the given output range, workers are identified that are able to transform the attributes that have to be transformed. Table 1 below gives an example of such a table. In step 5, for each worker a new state is calculated. Each new state is stored in a queue of states to investigate. In step 6, this state is compared with the target state. If both states are equal to each other (Y), a path of workers has been identified. This path is returned in step 7 and the method stops in step 8. But, if both states are different, the method returns to step 3 where now a state taken from the queue of states to investigate is compared with the target state to identify disjunct attributes. During execution of the method, a directed graph comprising nodes representing states and edges representing workers, and the starting node representing the source state, will be formed. At the moment a node is reached that represents the target state, a path has been found. By using a queue for storing states to investigate, a breadth first approach is taken. In another embodiment, a stack can be used for storing states to investigate. This leads to a depth first approach.

In a particular embodiment, each worker has an additional cost attribute. For each state obtained during the execution of the splitting method, cumulative costs are calculated and stored for that node. When a node, already reached earlier is reached again but via another path apparently, cumulative costs are compared and the incoming edge related to the highest cumulative cost is pruned from the graph. At the moment the target node is reached, the path is reproducible by backtracking through the graph, starting from the target node.

The splitting method according to an embodiment of the invention will now be illustrated by a detailed example with reference to Table 1 and Table 2. The present example considers a copy job where 10 copies have to be made. Table 1 shows a worker table where for an attribute a possible transformation domain can be looked up and the worker in charge of this transformation is given.

**TABLE 1**

| attribute | transformation | worker |
|---|---|---|
| document location | scanner -> file | scanner |
| | external file -> file | importer |
| | file -> external file | exporter |
| | file -> printer | printer |
| N number of copies | 0 -> 1 | scanner, PDL interpreter |
| | 1 -> n | printer |
| type (carrier type) | PDL -> Bitmap | PDL interpreter |
| | paper -> Bitmap | scanner |
| | Bitmap -> paper | printer |
| dir (carrier orientation) | any -> FUN | scanner |
| | FUN -> any | printer |
| | undefined -> FUN | PDL interpreter |
| plex (carrier plexity) | 1 -> 2 | printer |
| | 2 -> 1 | scanner |
| side (carrier-image | back -> front | scanner |

| | | |
|---|---|---|
| binding) | front -> back | printer |
| | undefined -> front | PDL interpreter |
| n (number of images per | n -> m | image manipulator |
| carrier side) | undefined -> m | PDL interpreter |
| pos (position of image on | (x,y) -> (x',y') | image manipulator |
| carrier in units of carrier | undefined -> (x',y') | PDL interpreter |
| format; (0,0) denotes | | |
| upper left; (0,1) denotes | | |
| bottom left) | | |
| size (image size) | (x,y) -> (x',y') | image manipulator |
| | undefined -> (x',y') | PDL interpreter |
| or (orientation of image | any -> any | image manipulator |
| with respect to carrier) | undefined -> any | PDL interpreter |
| zoom (zoom state with | 1 -> any | scanner |
| respect to source | undefined -> any | PDL interpreter |
| reference) | | |

A source state domain and a target state domain are presented in Table 2. The attributes such as loc, N and dir have to be changed. So from Table 1, workers are selected that are able to transform these attributes. This yields that the scanner worker is able to transform the identified attributes.
Next, it is calculated how the state domain is transformed by the worker in a new state domain. This new state domain is presented in Table 2 at line 3. This state domain is compared with the target domain. Compliance it not yet reached. The attributes distinct from attributes of the target state are determined. And a worker that is able to work on these attributes is looked up in Table 1.

**TABLE 2 STATES**

| line | loc | N | type | dir | plex | side | n | pos | size | or | zoom |
|---|---|---|---|---|---|---|---|---|---|---|---|
| 1.source | scan | 0 | paper | FDN | 1 | F | 1 | (0,0) | A4 | N | 100 |
| 2.target | print | 10 | paper | FUN | 1 | F | 1 | (0,0) | A4 | N | 100 |
| | | | | | | | | | | | |

| | | | | | | | | | | | |
|---|---|---|---|---|---|---|---|---|---|---|---|
| 3. interm. | file | 1 | BM | FUN | 1 | F | 1 | (0,0) | * | N | * |

In this example, the worker that is able to transform these attributes is the printer worker. So, the printer worker is selected next in the path. Transformation of the printer worker leads to the target state. So, a path of needed workers has been found by the splitter. Subjobs for these workers are formulated and placed in the systemJobList on the information black board.

The method according to the invention also accommodates situations where more than one source state is available, e.g., where a document has to be merged with a logo available in a separate image file.
The method according to the invention also accommodates situations where subjobs are processed in parallel. The path in such case has the form of a digraph, instead of a mere sequence of subjobs.
The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. System for carrying out jobs on documents,
comprising transformation units that in cooperation generate a target document from a source document for carrying out the job,
**characterized in that**
a document is stored according to a document model as a structure of components;
a component has a component state assigned and a document has a document state assigned, the document state comprising component states;
the transformation units having the ability to bring a component from a first state into a second state; and **in that**
the system further comprises:
- means for composing a digraph of transformation units that is able to transform components of a document in such a way that the document is brought from the source document state to the target document state; and
- means for managing the processing of components by transformation units according to the digraph of transformation units.

2. System according to claim 1,
**characterized in that** a transformation unit is **characterized by** a set of input states and a set of output states and in that the means for composing a digraph of transformation units, where edges represent transformation units and nodes represent states of components handles sets of states for each node.

3. System according to claim 1,
**characterized in that** a transformation unit has a cost attribute and
**in that** the means for composing the digraph has means for calculating total costs of a digraph based on the cost attributes of transformation units comprised in the digraph and has means for returning a digraph with minimum total costs.

4. System according to claim 1,
**characterized in that**
the system comprises clients for inputting a document and a job to be carried out on the document,
**in that** the means for composing the digraph carry out the following steps:
determining the state of components making up the source document
determining the state of components making up the target document
identifying attributes that have to be changed
identifying transformation units that change at least one of the identified attributes determining the resulting set of states
comparing the resulting set of states with the state of components making up the target document
repeating the step of identifying attributes that have to be changed, the step of
identifying transformation units and the step of comparing until the comparison is fulfilled returning the resulting digraph of transformation units.
